# EUROPEAN PATENT APPLICATION

(11) **EP 0 538 014 A2**
(43) Date of publication of application: **21.04.1993**
(21) Application number: 92309373.6
(22) Date of filing: 14.10.1992
(51) Int. Cl.: H04Q 7/04, H04B 7/26

(54) **Radio telecommunication apparatus with a plurality of system identification informations**

(30) Priority: 16.10.1991 JP 267735/91
(71) Applicant: KABUSHIKI KAISHA TOSHIBA, Kawasaki-shi, Kanagawa-ken 210 (JP)
(72) Inventor: Tomioka, Munehisa, c/o Intellectual Property Div., Minato-ku, Tokyo (JP); Takahashi, Shinya, c/o Intellectual Property Div., Minato-ku, Tokyo (JP)
(74) Representative: Kirk, Geoffrey Thomas

(57) **Abstract**

A radio telecommunication apparatus stores one or more system identification informations. When the apparatus receives a system identification information transmitted over a radio channel, the received system identification information is compared with each of one or more stored system identification informations. When the received system identification information coincides with one of one or more stored system identification informations, the apparatus is enabled communication with a base unit.

## Description

The present invention relates to radio telecommunication apparatus used in a radio telecommunication system such as a motor vehicle radio telephone system and a portable radio telephone system and more particularly to a radio telecommunication apparatus having a function of displaying whether the apparatus exists in its service area.

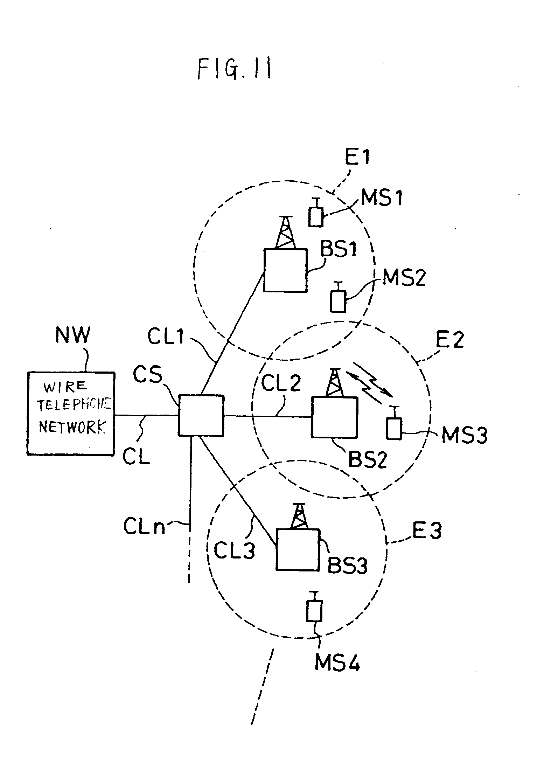

A cellular radio communication system will be described with reference to FIG. 11 of the accompanying drawings. The system comprises a control station CS connected with a wire telephone network NW, a plurality of base stations BS1-BSn, sometimes referred to as base units which are respectively connected with the control station CS via the landlines CL1-CLn, and a plurality of mobile radio apparatuses MS1-MSn. Each of these base units BS1-BSn has its own radio zone E1-En, respectively. The mobile radio apparatuses MS1-MSn may communicate with the base units BS1-BSn via radio links in the radio zones E1-En. If the user travels out of zone E1 and enters anotherzone E2, radio link for communicating the apparatus with the base unit BS2 is changed to the link in the radio zone E2.

One zone E or a plurality of zones (E1 En) provides a service area. Further a plurality of service areas are provided in a cellular radio system. Each service area is covered by a respective control station. If an identification number of the apparatus is registered in a control station, the service area is called a home area. Otherwise, an area is called a roam area.

User fees for calls from the cellular radio telephone apparatus in the roam area are higher than that in the home area.

When the calling party is located in the roam area and operates a call origination, a high fee is charged for the communication.

Further, when the called party is located in the roam area and receives an incoming signal, a high fee is charged for the communication.

Furthermore, each of the roam areas are provided by different service companies. Therefore, user fees for calls from the apparatus in one roam area is different from those in another roam area.

Users do not wish to communicate with a system corresponding to "high charge" service area to reduce user fees. However, when the calling party is located in the "high charge" service area and operates the call origination, the conventional apparatus is obliged to be connected with the system. Further, when the called party is located in the "high charge" service area and receives an incoming signal, the conventional apparatus is obliged to be connected with the system.

It is accordingly an object of the present invention to provide a radio telecommunication apparatus connected with one on more systems with which a user wishes to communicate.

According to a first aspect of the present invention radio telecommunication apparatus for use in a radio telecommunication system, wherein the radio telecommunication system emcompasses a plurality of areas each having one or more base units which broadcast a system identification information over one or more radio channels within the area of the base units characterised in that the radio telecommunication apparatus comprises:
receiving means for receiving a system identification information;
storing means for storing one or more system identification informations;
comparing means coupled to the receiving means and the storing means for comparing the received system identification information with each of one or more stored system identification informations, and
enabling means responsive to the comparing means for enabling a communication with the base unit if the received system identification information coincides with one of one or more system identification informations.

According to a second aspect of the invention radio telecommunication apparatus for use in a radio telecommunication system, in which the apparatus selects a first channel from a base station associated with a radio system, detects a first system identification information over the first channel, the apparatus comprising:
storing means for storing one or more system identification informations;
first enabling means responsive to the storing means for enabling a communication with the base unit if the first system identification information coincides with one of one or more stored system identification informations;
selecting means responsive to the first enabling means for selecting a second channel;
receiving means responsive to the selecting means for receiving a second system identification information over the second channel; and
second enabling means responsive to the receiving means and the stored means for enabling the communication with the base unit if the second system identification information coincides with one of one or more stored system identification informations.

According to a third aspect of the invention a method of enabling a radio telecommunication apparatus to use in a radio telecommunication system, wherein the radio telecommunication system emcompasses a plurality of areas each having one or more base units the method comprising the steps of:
storing one or more system identification numbers;
selecting a first channel associated with the system;
receiving a first system identification information over the first channel;
enabling a communication with the base unit if the first system identification information coincides with one of one or more stored system identification informations;
selecting a second channel associated with the system;
receiving a second system identification information over the second channel; and
enabling access to a channel over which a message may be transmitted from a user of the apparatus if the second identification information coincides with one of one or more stored system identification informations.

In order that the invention may be more readily understood it will now be described, by way of example only, with reference to the accompanying drawings in which:-
FIG.1 is a block diagram illustrating an arrangement of a mobile telephone apparatus according to an embodiment of the present invention.
FIG.2 is a flow chart illustrating a connection control operation sequence in the cellular telephone system of the present invention.
FIG.3 is a flow chart illustrating a reset operation step in the connection control operation of FIG.2.
FIG.4 is a flow chart illustrating an initialization operation step in the connection control operation of FIG.2.
FIG.5 is a flow chart illustrating an operation after initialization in the connection control operation.
FIG.6 is a flow chart illustrating an incoming response operation sequence in the connection control operation.
FIG.7 is a flow chart illustrating a call origination operation sequence in the connection control operation.
FIG.8 is a content of an ID-ROM of FIG.1 storing system identification informations.
FIG.9 is a flow chart illustrating a determining operation sequence according to an embodiment of the present invention in the operations of FIG.4,

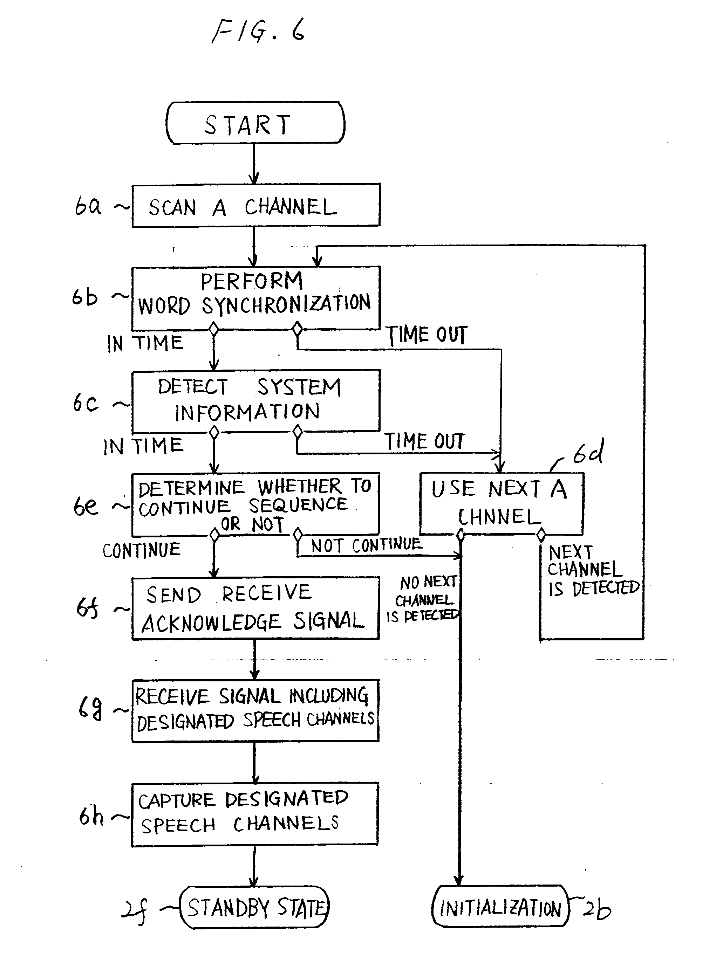

FIG.6 and FG.7.

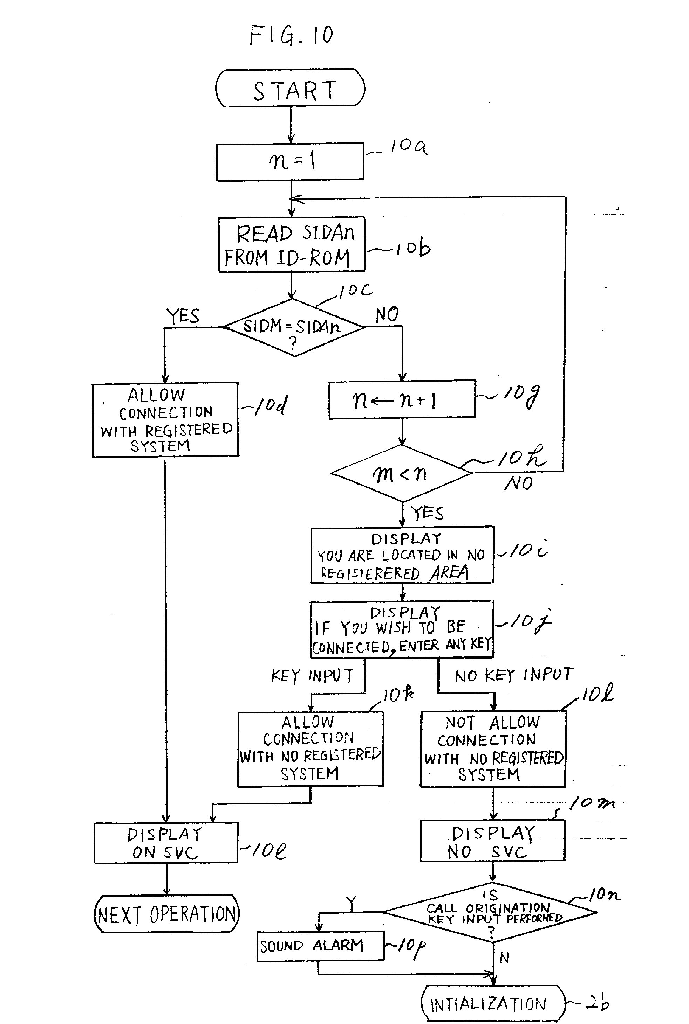

FIG.10 is a flow chart illustrating a determining operation sequence according to another embodiment of the present invention.
FIG.11 is a block diagram illustrating a plurality of zones covered by base stations in a conventional cellular radio telephone system.

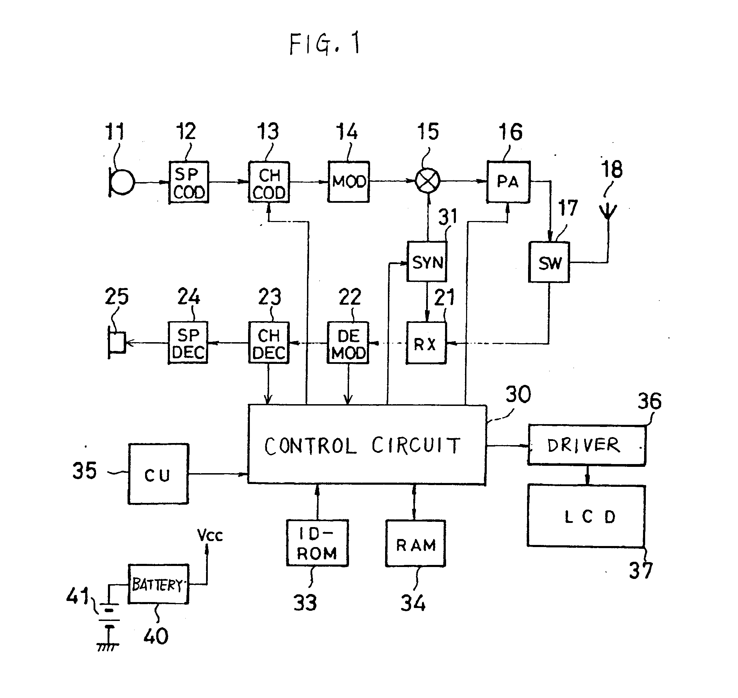

Referring first to Fig.1, there is shown a block diagram of a radio telephone apparatus in accordance with an embodiment of the present invention.

The radio telephone apparatus is roughly divided into transmission, reception and control sections. Reference numeral 40 denotes a power supply such as a battery. The transmission section comprises a microphone 11 ,a speech coder (SPCOD) 12 ,an error correction coder (CHCOD) 13, a digital modulator (MOD)14 ,an adder 15 ,a power amplifier (PA) 16 ,a high frequency switch circuit (SW) 17 and an antenna 18.

Atransmit audio signal from the microphone 11 is subjected at the speech coder 12 to a coding. The speech coder 12 outputs the digital transmit signal. The error correction coder 13 performs its error correction coding operation over the digital transmit signal and a digital control signal issued from a control circuit 30 (which will be explained later).

The digital modulator 14 generates a modulation signal corresponding to a digital transmit signal issued from the error correction coder 13 . The adder 15 adds the modulation signal received from the digital modulator 14 and a carrier signal received from a synthesizer 32 for frequency conversion. The power amplifier 16 amplifies a high frequency signal received from the adder 15 into a predetermined level.

The high frequency switch 17 is turned ON only for a period of time corresponding to a transmit time slot specified by the control circuit 30. During this time the high frequency switch 17 receives the transmit signal from the power amplifier 16 and supplies it to the antenna 18. The transmit signal is transmitted toward a base station (not shown) in the form of a radio transmit signal.

The receiver section includes a receiver (RX) 21, a digital demodulator (DEM) 22 ,an error correction decoder (CHDEC) 23 , a speech decoder (SPDEC) 24 and a receiver 25.

The receiver 21 performs its frequency converting operation over a radio receive signal received from the antenna through the high frequency switch 17 . The digital demodulator 22 performs its bit and frame synchronizing operations over a receive signal received from the receiver 21 to obtain a synchronized signal and supplies the synchronized syignal to the control circuit 30 . The bit and frame synchronizing operations are defined as a word synchronization. The error correction decoder 23 performs its error correction decoding operation over a digital demodulation signal received from the digital demodulator 22 to obtain a digital receive signal.

Further, the error correction decoder 23 provides a digital control signal for scanning channels and communication, to the control circuit 30.

The digital receive signal issued from the error correction decoder 23 is sent to the speech decoder 24 . The speech decoder 24 performs its decoding operation over the digital receive signal into an analog receive signal. The analog receive signal is then sent to the speaker 25 .

Further,the control section includes the aforementioned control circuit 30, the aforementioned frequency synthesizer (SYS) 31 ,an ID-ROM 33 for storing system identification informations, RAM 34 for storing control data ,console unit (cu) 35 ,an LCD driver 36 and LCD 37. The synthesizer 31 generates an oscillation frequency necessary for radio communication with the base station under control of the control cuircuit 30.

The ID-ROM 33 is an E^{Z}PROM having registraion area. A system identification information is fixed to each of a plurality of systems. The system identification information is transmitted from the base station and defined as SIDM in this specification.

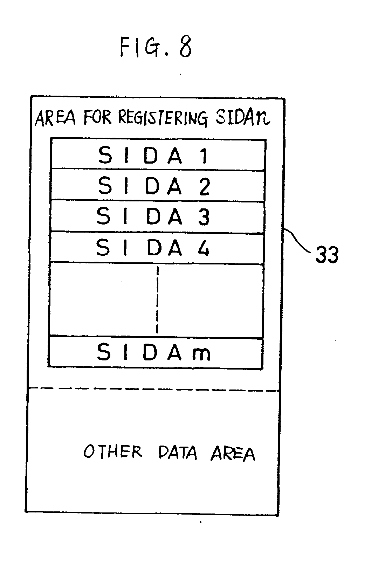

In the event that a user wishes to communicate with specific systems, system identification informations corresponding to the systems are stored in the ID-ROM 33 and defined as SIDAn(n=1 -m), as illustrated in FIG. 8.

Telephone numbers from the console unit 35 ,and SIDM from the base station are temporarily stored in the RAM 34. The console unit 35 has a keypad including a dialing key and a call origination key. LCD 37 is driven by the driver 36 and displays information for operating the telephone.

The control circuit detects the system identification number transmitted from the base station. The SIDM is compared with SIDAn (n=1 -m) stored in ID-ROM 33 . When one of SIDAn coincides with the SIDM, the telephone apparatus is allowed to be connected with the system corresponding to the SIDM. When none of SIDAn coincides with the SIDM ,the apparatus is not allowed to be connected with the system. This information is displayed on LCD 37.

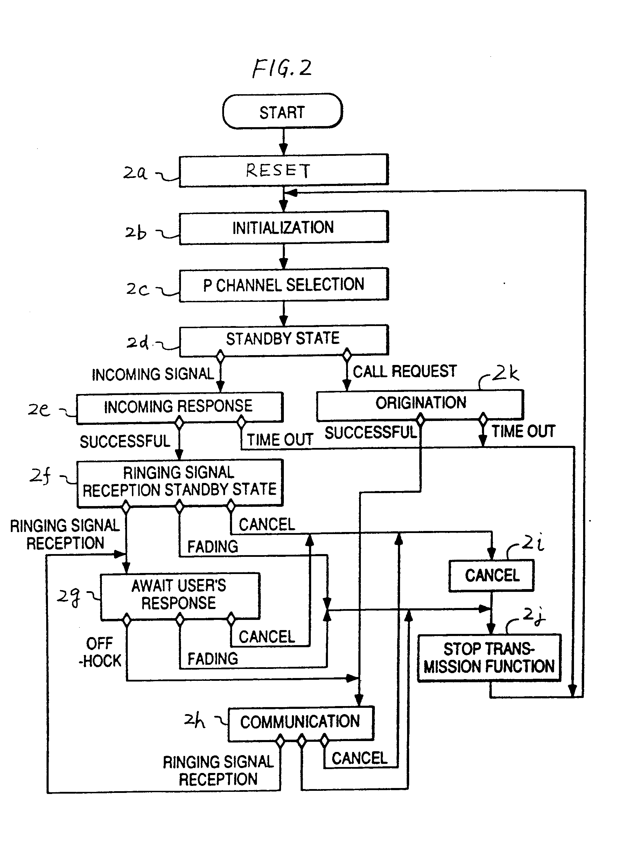

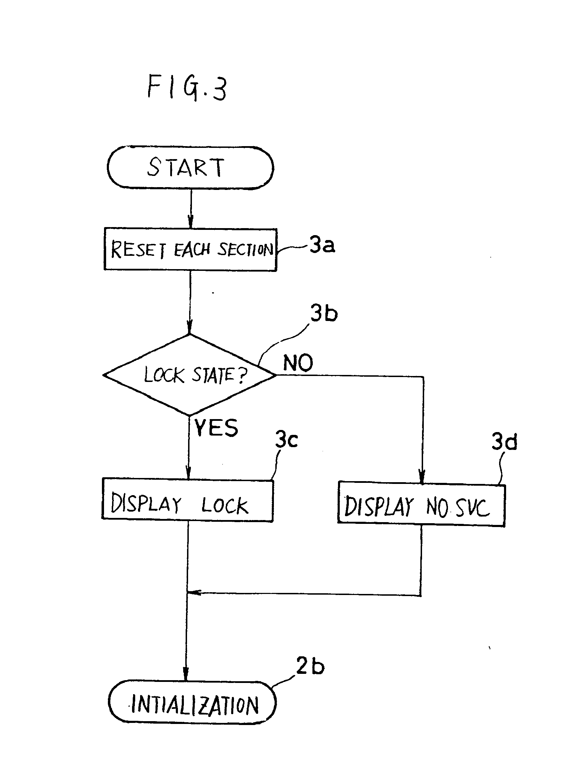

A connection control operation of telephone apparatus will now be described with reference to FIG. 2 . When a power switch is turned on, a reset operation starts (step 2a) . This operation is illustrated with reference to FIG. 3 .

In response to a power switch, the control circuit 30 resets each section (step 3a) . After that, whether the apparatus is allowed to be used or not, is checked. This ckeck is defined as a lock state check (step 3b). As long as the lock state is not cancelled another party is not allowed to operate the apparatus. In this state, "Lock" is displayed on the LCD (step 3c). In the event that the apparatus is not set to be "Lock state", "NO SVC" is displayed (step 3d). "NO SVC" means that a communication service is not still started during the reset operation. After the reset operation, an initialization starts (step 2b) .

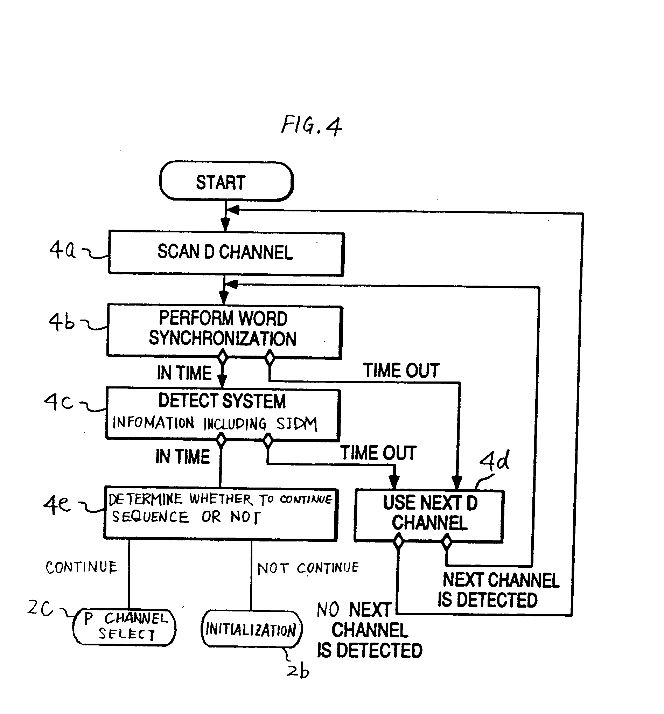

FIG.4 is a detailed flow chart which illustrates the initial radio channel connection operation, defined as the initialization. The control circuit 30 controls synthesizer 320 to change the frequency of output therefrom. Thereby,a predertermined range of control channels (referred to as D channels hereinafter) are scanned to obtain the information indicative of electric field intensity of the received signals over each channel (step 4a) . The channel having the strongest electric field intensity Is selected from the D channels and the device is ready for receiving signals through the D channel having the strongest electric field intensity. In this case,information of a channel having the second strongest intensity is also obtained.

The control circuit 30 performs bit and frame synchronization operations (referred to as a word synchronization) on signals received through the selected D channel (step 4b) . If the word synchronization is performed within a predetermined period of time,a system information is detected by signals received through this D channel (step 4c) .

The system information includes a system identification information (SIDM) and a range of frequency channels (referred to as P channels hereinafter) to be scanned next. If the system information is detected within a predetermined period of time, the control circuit 30 compares the received SIDM with each of system identification informations stored in ID-ROM 33 (referred to as SIDAn) . Responsive to the result of the comparison , the control circuit 30 determines whether to continue communication sequence or not (step 4e).

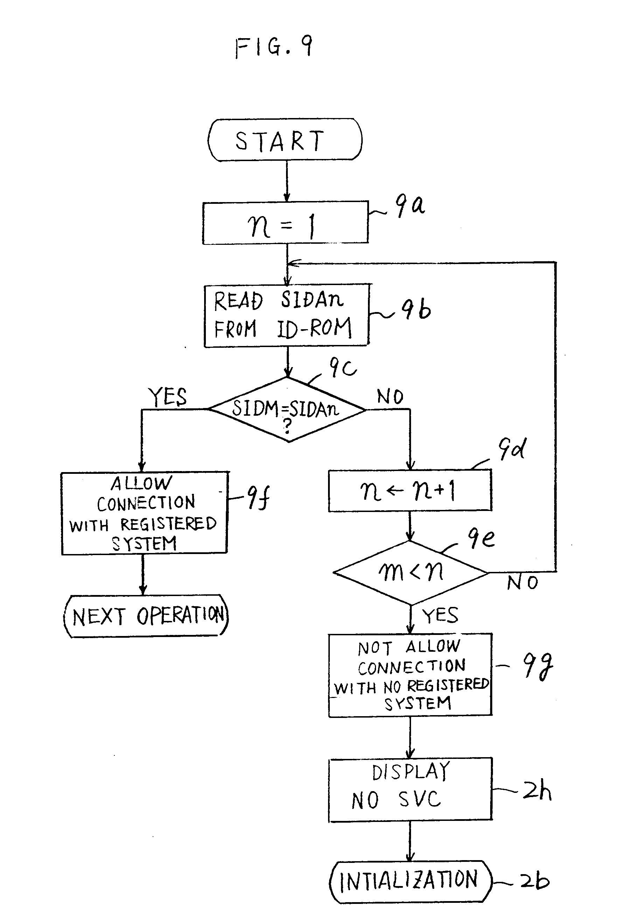

This operation is illustrated by FIG.9 . When "n" is set to be "I" (step 9a) , SIDAI is read from the ID-ROM 33 (step 9b). The ID-ROM 33 has a plurality of SIDAn (n=1 -m) illustrated by FIG. 8 . The control circuit 30 compares the received SIDM with the SIDA1 (step 9c) . In the event that the received SIDM does not coincide with the SIDAI , the value of "n" is increased (step 9d) . The comparison in step 9c is performed until the value of "n" is larger than the value of "m" (step 9e) .

If the received SIDM coincides with one of the stored SIDAn, the control circuit 30 regards the system having the received SIDM as a system with which the user wishes the appratus to be connected. After that, the control circuit 30 allows the appratus to be connected with the system (step 9f) and performs P channels scan operation. If the received SIDM does not coincide with any of SIDAn, the control circuit 30 does not allow the appratus to be connected with the system (step 9g). Thereafter, "NO SVC" is displayed (step 2h) and the initialization is resumed (step 2b).

Referring to FIG.4 again, if the word synchronization is not performed within a predetermined period oftime, the D channel having the second strongest intensity is used to repeat the above operation (step 4d) . In this case, if word synchronization or system information reception is again not performed within the predetermined period of time, the control circuit scans the D channels again (step 4a) .

When the above initialization operations are completed, the control circuit 30 continues communication sequence and performs scanning similar to the above scanning operation for the P channels for receiving incoming signal (step 2c) .

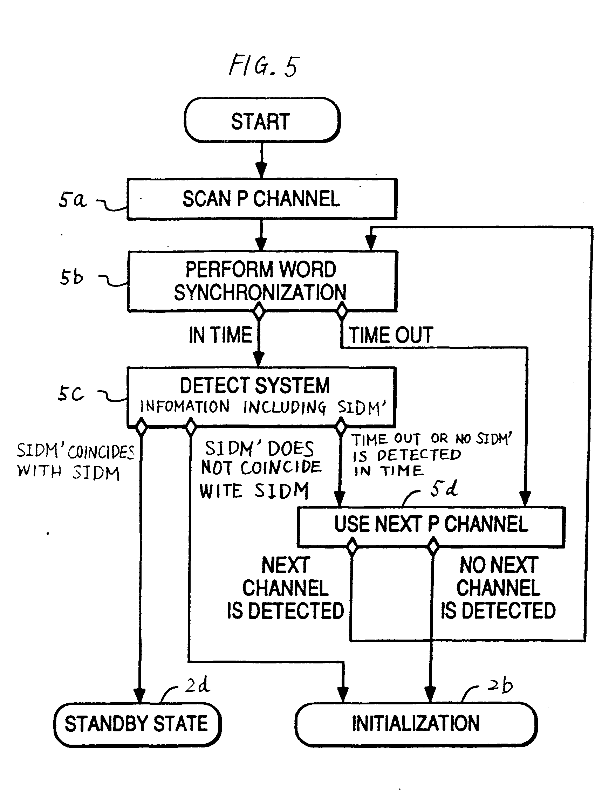

FIG.5 is a detailed flow chart which illustrates the P channel connection after intialization. P channels are scanned to obtain the information indiicative of the electric field intensity. The appratus is ready for receiveing information through the P channel having the strongest field intensity. In this case, information indicative of the P channel having the second strongest intensity is also obtained (step 5a).

The word synchronization operation is performed on signals received through the P channel having the strongest field intensity (step 5b) . After that, the control circuit 30 obtains a system information including SIDM' and compares this SIDM' received through P channel with the SIDM received through D channel temporarily stored in RAM 34 (step 5c). If the SIDM' received through P channel coincides with the SIDM received through D channel, the apparatus is set to be a receive standby mode (step 2d) . Otherwise, initialization is resumed (step 2b) .

If the word synchronization is not performed or the system information or SIDM' is not obtained within a predetermined period of time, an operation similar to the above described is performed for the P channel having the second strongest intensity (step 5d) . When the word synchronization or the system information reception is again not performed within a predetermined period of time, initialization is resumed (step 2b).

In the standby state in step 2d of FIG.2 , if the apparatus receives an incoming signal, an incoming response sequence is performed (step 2e) . The sequence is illustrated by FIG.6.

The control circuit 30 causes the demodulator to scan each predetermined control channel (defined as A channel) to obtain reception electric field intensity information. In this case, information indicative of the control channel having the second strongest electric field intensity is also obtained.

Next, a word synchronization is performed on signals received through the selected A channel (step 6b) . If the word synchronization is performed within a predetermined period of time,a system information is detected by signals received through this Achannel (step 6c) . Thereafter the control circuit 30 detrmines whether to continue sequence (step 6e) . The operation is similar to the operation illustrated in FIG.9. If the word synchronization is not performed orthe system information is not obtained within a predetermined period of time, the A channel having the second strongest intensity is used to repeat the above operation (step 6d). In this case, if word synchronization is again not performed or system reception is again not performed within a predetermined period of time, initialization is resumed (step 2b) .

In the operation of the step 6e, if the received SIDM coincides with one of the SIDAn stored in the ID-ROM 33 ,a receive acknowledge signal is sended through the selected A channel to the base station (step 6f) . Thereafter, a signal including an information indicative of designated speech channels is received (step 6g). Thereafter a shortened burst signal is sended to the base station and therefore a time alignment is performed.

In this state, A channels are switched to the designated speech channels (they are called DT channels) which include a forward channel for transmitting audio signals to the base station and a backward channel for receiving audio signals from the calling apparatus (step 6h) . Thereby a communication link between a calling telephone apparatus and the called apparatus.

The apparatus is set to be a standby state for receiving an incoming signal (step 2f in FIG. 2) . When a calling signal is received, the apparatus generates a ringing tone. In this state, the apparatus is set to be awaiting user's response (step 2g).

When the use responds to the ringing tone by taking handset or depressing a "SEND" key, the control circuit 30 performs a communication with the calling party (step 2h) .

When the electric field intensity of speech channels is less than a predetermined level because of a fading during more than a predetermined period of time, the transmission function is disabled (step 2j) . During communication, when the user takes the handset on-hook, the communication through speech channels is ceased (step 2i) . Thereafter when the transmission function is disabled (step 2j) , initialization is resumed (step 2j) .

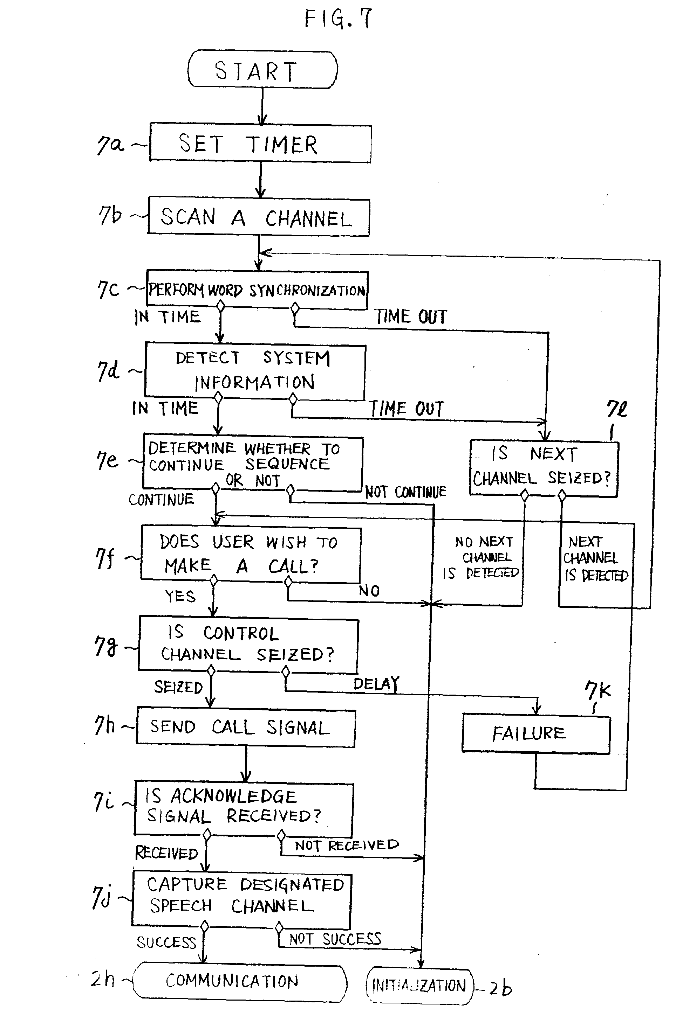

In the standby state in step 2d of FIG.2 ,when a call request is detected by an input at the console unit 35 or a voice dialing, a call origination operation starts (step 2k) . This operation is illustrated by FIG.7 . A timer for counting a call reception time is set (step 7a). The set time is, e.g. , 12 seconds.

Thereafter,the control circuit causes the demodulator to scan each predetermined A channel (control channel) to obtain reception electric field intensity information. The channel having the strongest electric field intensity is selected from these control channels and the apparatus is set to receive signals through the control channel having the strongest intensity. In this case, information indicative of the control channel having the second strongest electric field intensity is also obtained (step 7b) .

Next the word synchronization operation is performed on signals received through the selected A channel (step 7c) . If the word synchronization operation is performed within a predetermined period of time, a system information is detected from signals received through this control channel (step 7d) . The control circuit obtains an SIDM from the received system information and compares the obtained SIDM with SIDAn (n=1 -m) stored in ID-ROM 33 and determines whether to continue sequence or not. This operation in step 7e is similar to the operation illustrated in FIG. 9 .

Referring to FIG. 9,in the event that the obtained SIDM coincides with one of the second SIDAn, the control circuit allows the apparatus to be connected with the system. If the received SIDM does not coincide with any of SIDAn, the apparatus is not allowed to be connected with the system and initialization is resumed (step 2b).

Referring to FIG. 7 again, if word synchronization cannot be performed, the same operation is performed using the control channel having the second strongest intensity (step 71) . In this case, if no word synchronization can be performed, initialization is resumed (step 2b) .

The presence of the user's will is checked (step 7f) . This check is performed as follows. If the user enters a telephone number to be called on the console unit and depress "SEND" key, these key inputs are detected and a call flag in the control circuit is set at a logic "1".

In the case, the apparatus determines that the user wishes to make a call. However, if the user depresses "END" key after depression of the "SEND" key, the call flag is reset at a logic "0" . In this case, the apparatus determines that the user does not wish to make a call and initialization is resumed (step 2b) .

When the call flag is at the logic "1 the control circuit confirms whether the selected control channel is appropriate for the orignation signal to be broadcast by analyzing the system information signal from a base station (step 7g) . If the selection of an appropriate is delayed (step 7k) , the apparatus checks again whether the user wishes to make a call (step 7f) .

If the control circuit detects that the user's will to make a call is confirmed and an appropriate control channel for broadcast of an origination signal is selected, a call origination signal including the telephone number to be called, which is entered by the user, is transmitted over this control channel (step 7h) .

Thereafter, the apparatus detects whether the acknowledge signal from the base statin has been received (step 7i) . When the acknowledge signal is received, a slot synchronization is performed. After that, the shortened burst signal is sended to the base station and therefore the time alignment is performed.

The acknowledge signal includes an information indicative of designated speech channels. The base station calls the other party to be called on the basis of the telephone number included in the origination signal. Acommunication link over the designated channels may then be established between the apparatus and the called apparatus (step 7j) . Otherwise, initialization is resumed (step 2b) .

As has been described, the SIDM detected from the system information is compared with the SIDAn (n=1 -m) stored in the ID-ROM in the initialization sequence, incoming response sequence and call origination sequence. In the event that, the SIDM does not coincide with the SIDAn, the apparatus is not allowed to be connected with the system having the SIDM.

Accordingly in the embodiment, if the apparatus is located in the area corresponding to the system with which the user does not wish the apparatus to be connected, the apparatus is set to be disconnected with the system.

When the apparatus is located in the first area corresponding to the first system with which the user wishes the apparatus to be connected, (this system is defined as a willing system), the apparatus maintains connection with the base unit during initialization. Thereafter, if the apparatus moves from the first area to the second area corresponding to the second system with which the user does not wish the apparatus to be connected (this system is defined as an unwilling system), this embodiment prevents the apparatus from being connected with the second unwilling system in the incoming response sequence orthe call origination sequence. Accordingly the embodiment prevents the user from paying high fee as compared with the conventional apparatus connected with the unwilling system.

This operation is performed not only in the initialization but also in the incoming response sequence and in the call origination sequence. Accordingly when the apparatus moves from the first area corresponding to the first willing system to the second area corresponding to the second unwilling system after the initialization operation, the apparatus is set to be disconnected to the second unwilling system.

Since the apparatus displays "NO SVC" when the SIDM obtained through the signal from the base station does not coincide with the SIDAn stored in the ID-ROM, the user may distinguish this state from the apparatus being out of order.

Stored SIDAn may be SlDs corresponding to unwilling systems with which the user does not wish the apparatus to be connected. However, when a new system increases, the user needs to store a new SID corresponding to the new unwilling system. On the contrary in the above embodiment, stored SIDAn are SIDs corresponding towilling systems with which the user wishes the apparatus to be connected. Therefore the user does not need to store the new SID corresponding to the new unwilling system.

FIG.10 illustrates another embodiment showing determining operation whether to continue sequence or not. When the SIDM coincides with one of the Sl-DAn (step 10a,10b,10c), the apparatus is allowed to be connected with the system (step 10d). Thereafter the apparatus displays "ON SVC" (step 10e). After that the control circuit performs next operation.

When the SIDM does not coincide with any of the SIDAn (n=1-m) (step 10c,10g,10h) , the apparatus displays "YOU ARE LOCATED IN NO REGISTERED AREA" (step 10i) . Thereafter the apparatus displays "IF YOU WISH TO BE CONNECTED, ENTER ANY KEY" . This information means that the apparatus is awaiting the user's response whether the user wishes the apparatus to be connected with the unwilling (no registered) system having a system identification information which is not stored in the ID-ROM 33.

When the user's key input is performed, the apparatus is allowed to be connected with no registered system (step 10k) , and displays "ON SVC" and performs next operation (step 1 Oe).

When the user's key input is not performed within a predetermined period of time, the apparatus is not allowed to be connected with no registered system (step 101). Thereafter the apparatus displays "NO SVC" (step 10m). In this state, if a call origination key input is operated within a predetermined period of time (step 10n) , the control circuit sounds alarm (step 10p). Otherwise, initialization is resumed (step 2b) .

Further, if a call origination key input is operated within a predetermined period of time, the control circuit may informe a user that the apparatus is unabled to be used by means of LCD or a diode giving light.

This embodimet enables the user to confirm whether the apparatus is connected with the system having a system identification information which is not stored in the ID-ROM 33.

Further the content of the information on LCD may be another one indicating that the apparatus is unable to be connected to the system.

Although in the above embodiment the number of the stored SIDAn is "m", the value of "m" may be one or more.

Although in the above embodiment the control circuit urges the user to input an information necessary for enabling communication, the control circuit may urge the userto input another information necessary for disabling communication in another embodiment.

Although in the above embodiment the control circuit displays the result of the comparison and an information for urging the user to determine whether to continue sequence, a voice synthesizer may generate a synthesized voice corresponding to the information.

Although an embodiment applied to a mobile telephone apparatus has been described, it is apparent to those skilled in this art that this invention may be easily applied to any kind of radio thelecommunica- tion apparatus, for example, to a portable type radio telephone. This invention also is applicable to an apparatus adopting an analog modulating system and a dual mode apparatus adopting one of the digital modulating system or the analog modulating system. Further, the concepts of the present invention may be applied to a data transmission apparatus used in a cellular radio telecommunication system.

## Claims

1. Radio telecommunication apparatus for use in a radio telecommunication system, wherein the radio telecommunication system emcompasses a plurality of areas each having one or more base units which broadcast a system identification information over one or more radio channels within the area of the base units characterised in that the radio telecommunication apparatus comprises:
receiving means for receiving a system identification information;
storing means for storing one or more system identification informations;
comparing means coupled to the receiving means and the storing means for comparing the received system identification information with each of one or more stored system identification informations, and
enabling means responsive to the comparing means for enabling a communication with the base unit if the received system identification information coincides with one of one or more system identification informations.

2. The apparatus of claim 1 further comprising urging means responsive to the comparing means for urging a user to input an indicating information necessary for selecting either enabling the communication or disabling the communication if the received system identification information does not coincide with any one of one or more stored system identification informations and selecting means responsive to the indicating information for selecting either enabling the communication or disabling the communication.

3. The apparatus of claim 2 further comprising means responsive to the urging means for disabling the communication if the indicating information is not inputted with a predetermined period of time and means responsive to the urging means for enabling the communication if the indicating information is inputted within a predetermined period of time.

4. The apparatus of claim 1 wherein the comparing means further generates an output signal, the apparatus further comprising informing means, such as display means, responsive to the comparing means for informing a user of an information relating to the output signal if the received system identification information does not coincide with any one of one or more stored system identification informations.

5. The apparatus of claim 1 wherein the comparing means further generates an output signal, the apparatus further comprising voice synthesis means responsive to the comparing means for generating a synthesized voice corresponding to an information relating to the output signal.

6. The apparatus of claim 1 wherein the enabling means further generates an output signal, the apparatus further comprising informing means, such as display means, responsive to the enabling means for informing a user of an information relating to the output signal.

7. Radio telecommunication apparatus as claimed in claim 1 including disabling means responsive to the comparing means for disabling a communication with the base unit if the received system identification information does not coincide with any one of one or more stored system identification informations.

8. The apparatus of claim 1 including selecting means responsive to the comparing means for selecting either enabling a communication with the base unit or disabling the communication with the base unit.

9. The apparatus of claim 8 wherein the selecting means further generates an output signal, the apparatus further comprising informing means, such as display means, responsive to the selecting means for informing a user of an information relating to the output signal.

10. The apparatus of claim 8 wherein the selecting means further generates an output signal, the apparatus further comprising voice synthesis means responsive to the selecting means for generating a synthesized voice corresponding to an information.

11. Radio telecommunication apparatus for use in a radio telecommunication system, in which the apparatus selects a first channel from a base station associated with a radio system, detects a first system identification information over the first channel, the apparatus comprising:
storing means for storing one or more system identification informations;
first enabling means responsive to the storing means for enabling a communication with the base unit if the first system identification information coincides with one of one or more stored system identification informations;
selecting means responsive to the first enabling means for selecting a second channel;
receiving means responsive to the selecting means for receiving a second system identification information over the second channel; and
second enabling means responsive to the receiving means and the stored means for enabling the communication with the base unit if the second system identification information coincides with one of one or more stored system identification informations.

12. A method of enabling a radio telecommunication apparatus to use in a radio telecommunication system, wherein the radio telecommunication system emcompasses a plurality of areas each having one or more base units the method comprising the steps of:
storing one or more system identification numbers; selecting a first channel associated with the system;
receiving a first system identification information over the first channel;
enabling a communication with the base unit if the first system identification information coincides with one of one or more stored system identification informations;
Selecting a second channel associated with the system;
receiving a second system identification information over the second channel; and
enabling access to a channel overwhich a message may be transmitted from a user of the apparatus if the second identification information coincides with one of one or more stored system identification informations.
